# EUROPÄISCHE PATENTSCHRIFT

(11) **EP 2 786 325 B1**
(45) Veröffentlichungstag und Bekanntmachung des Hinweises auf die Patenterteilung: **12.12.2018**
(21) Anmeldenummer: 12778986.5
(22) Anmeldetag: 08.10.2012
(51) Int. Cl.: A01D 41/12, A01D 43/08, G06Q 10/08, G06Q 50/02, G05D 1/02

(54) **VERFAHREN UND VORRICHTUNG ZUM KOORDINIEREN EINER TRANSPORTLOGISTIK SOWIE TRANSPORTLOGISTIKSYSTEM**
METHOD AND APPARATUS FOR COORDINATING A TRANSPORT LOGISTIC AND TRANSPORT LOGISTIC SYSTEM
MÉTHODE ET DISPOSITIF POUR COORDONNER UN LOGISTIQUE DE TRANSPORT ET SYSTÈME DE LOGISTIQUE DE TRANSPORT

(30) Priorität: 03.12.2011 DE 102011120402
(43) Veröffentlichungstag der Anmeldung: 08.10.2014
(73) Patentinhaber: Robert Bosch GmbH, 70442 Stuttgart (DE)
(72) Erfinder: BELSER, Florian, 72379 Hechingen (DE); MAURER, Thomas, 91564 Neuendettelsau (DE)
(86) Internationale Anmeldenummer: PCT/EP2012/069833
(87) Internationale Veröffentlichungsnummer: WO 2013/079247

(56) Entgegenhaltungen:
- DE-A1-102005 059 003
- DE-A1-102008 021 785
- DE-A1-102008 027 282
- DE-A1-102009 027 245
- US-A1- 2010 070 145
- US-A1- 2011 213 531
- US-B1- 6 216 071

## Beschreibung

Die vorliegende Erfindung bezieht sich auf ein Verfahren und eine Vorrichtung zum Koordinieren einer Transportlogistik, auf ein Transportlogistiksystem sowie auf ein entsprechendes Computerprogrammprodukt.

In einer herkömmlichen Logistikkette im Außenbereich können einzelne Prozessschritte automatisiert ausgeführt werden. Beispielsweise kann ein Beladevorgang eines Transportbehälters an einer Erntemaschine automatisiert durchgeführt werden. Um den Transportbehälter von der Erntemaschine zur Straße zu bringen, ist jedoch ein Fahrer erforderlich.

Die DE 10 2008 021785 A1 offenbart eine Vorrichtung zum Koordinieren eines Bearbeitungsvorgangs von landwirtschaftlicher Fläche. Die Vorrichtung umfasst Mittel zum Empfangen von Positionsinformation von einem Bearbeitungsfahrzeug und einem Transportfahrzeug zum Transportieren von von dem Bearbeitungsfahrzeug im Laufe des Bearbeitungsvorgangs gesammeltem oder verbrauchtem Material zwischen dem Bearbeitungsfahrzeug und einem Stützpunkt. Ferner umfasst die Vorrichtung eine Verarbeitungseinheit zum Erstellen eines Vorschlags für eine Route des Transportfahrzeugs zwischen dem Bearbeitungsfahrzeug und dem Stützpunkt. Das Material kann während eines Ladevorgangs von dem Bearbeitungsfahrzeug in das Transportfahrzeug übergeladen werden.

Die DE 10 2005 059 003 A1 offenbart ein Routenplanungssystem für landwirtschaftliche Arbeitsmaschinen.

Die US 6,216,071 B1 offenbart ein Verfahren zum Überwachen und Koordinieren der Ernte- und Transportvorgänge einer agrarwirtschaftlichen Ernte durch eine Mehrzahl agrarwirtschaftlicher Maschinen auf einem Feld.

Die US 2010/070145 A1 offenbart ein System und ein Verfahren zur interaktiven Koordination eines Übergabeverfahrens von Erntegut von einer Erntemaschine an eine Transportmaschine, wobei kurzreichweitige Kommunikationsmittel zum Einsatz kommen.

In der DE 10 2008 027 282 A1 ist ein landwirtschaftliches Fahrzeug und ein Betriebsverfahren für das landwirtschaftliche Fahrzeug gezeigt, wobei das landwirtschaftliche Fahrzeug zwischen einem fahrergesteuerten Modus und einem ferngesteuerten Modus umschaltbar ist.

Die DE 102009 027 245 A1 offenbart eine Steueranordnung zur Kontrolle des Überladens landwirtschaftlichen Ernteguts von einer Erntemaschine auf ein Transportfahrzeug.

Es ist die Aufgabe der vorliegenden Erfindung, ein verbessertes Verfahren und eine verbesserte Vorrichtung zum Koordinieren einer Transportlogistik, ein verbessertes Transportlogistiksystem sowie ein verbessertes Computerprogrammprodukt zu schaffen.

Diese Aufgabe wird durch ein Verfahren und eine Vorrichtung zum Koordinieren einer Transportlogistik, ein Transportlogistiksystem sowie ein entsprechendes Computerprogrammprodukt gemäß den Hauptansprüchen gelöst.

Bei einem Prozess mit fortlaufendem Transportbedarf von und/oder zu einer Maschine, wie beispielsweise beim Ernten von Feldfrüchten, beim Abbauen von Rohstoffen, im Straßenbau oder beim Ausbringen von Düngemittel fallen Transportaufgaben an, um die Feldfrüchte, Rohstoffe, Baumaterialien oder Düngemittel von einer Erntemaschine oder Abbaumaschine zu einer Sammelstelle oder Übergabestelle oder umgekehrt zu einer Baumaschine oder einer Ausbringmaschine zu transportieren.

Die Transportaufgaben können in Verbindung mit einem Beladeprozess und/oder einem Abladeprozess automatisiert und/oder gesteuert werden. Dadurch können die Transportaufgaben bedarfsgerecht verteilt werden, und die Ernte, der Abbau oder die Ausbringung kann ohne Unterbrechung durchgeführt werden. Selbstfahrende Transporter können einen Personalbedarf für die Transportaufgaben reduzieren. Die Transporter können bereits zu der Erntemaschine, Abbaumaschine oder Ausbringmaschine geführt werden, bevor die Erntemaschine, Abbaumaschine oder Ausbringmaschine die Ernte, den Abbau oder das Ausbringen aufgrund überfüllten oder entleerten Zwischenspeichers unterbrechen muss.

Ein Verfahren zum Koordinieren einer Transportlogistik weist die folgenden Schritte auf:
Empfangen eines Anforderungssignals einer Arbeitsmaschine über eine Schnittstelle einer Vorrichtung zum Koordinieren, wobei das Anforderungssignal einen Transportbedarf der Arbeitsmaschine signalisiert;
Senden eines Steuersignals über eine Schnittstelle der Vorrichtung an eine Transportmaschine, um die Transportmaschine zu der Arbeitsmaschine zu führen, wenn das Anforderungssignal empfangen wurde, wobei das Steuersignal eine Pfadinformation über einen Pfad der Arbeitsmaschine umfasst, um die Transportmaschine während des Ladevorgangs parallel zu dem Pfad zu führen, wobei die Pfadinformation eine geplante Trajektorie der Arbeitsmaschine in einem Arbeitsumfeld ist, auf der sich die Arbeitsmaschine voraussichtlich bewegen wird;
Empfangen eines Koppelungssignals über eine Schnittstelle der Vorrichtung, wenn die Transportmaschine eine Ladeposition relativ zu der Arbeitsmaschine erreicht hat; und
Senden eines Ladesignals über eine Schnittstelle der Vorrichtung, um einen Ladevorgang zum Decken des Transportbedarfs zu starten, wenn das Koppelungssignal empfangen wurde.

Senden eines Ladesignals über eine Schnittstelle der Vorrichtung, um einen Ladevorgang zum Decken des Transportbedarfs zu starten, wenn das Koppelungssignal empfangen wurde;
Erkennen anhand der geplanten Trajektorie, wenn die Arbeitsmaschine eine Richtungsänderung durchführen wird;
Senden eines Ladeunterbrechungssignals zum Unterbrechen des Ladevorgangs über eine Schnittstelle der Vorrichtung, wenn die Richtungsänderung der Arbeitsmaschine bevorsteht; und
Ermitteln einer Trajektorie zur Führung der Transportmaschine, während die Arbeitsmaschine eine Kehre ausführt und Übermitteln der Trajektorie an die Transportmaschine über eine Schnittstelle der Vorrichtung.

Unter einer Transportlogistik können Vorgänge verstanden werden, die dazu dienen, Güter von und/oder zu einem Glied einer Logistikkette zu transportieren. Beispielsweise können Grund- und Ausgangsstoffe zu einem Verarbeitungsort transportiert werden, und Produkte am Entstehungsort abgeholt werden. Eine Arbeitsmaschine kann beispielsweise eine Erntemaschine oder eine Baumaschine sein. Die Erntemaschine kann einen Transportbedarf an Erntegut signalisieren, wenn ein Zwischenspeicher für das Erntegut einen vorbestimmten Füllstand überschreitet. Die Baumaschine kann den Transportbedarf signalisieren, wenn ein Zwischenspeicher einen vorbestimmten Füllstand unterschreitet. Eine Transportmaschine kann eine Transportkapazität aufweisen. Die Transportkapazität kann beispielsweise ein Behälter für das Transportgut sein. Der Behälter kann beispielsweise ein Container oder ein Anhänger sein. Wenn die Transportmaschine sich an die Arbeitsmaschine annähert, kann die Transportmaschine eine Ladeposition einnehmen. Beispielsweise kann die Transportmaschine seitlich neben der Arbeitsmaschine in einem festgelegten Abstand und/oder Winkel zu der Arbeitsmaschine fahren. Eine Ladeeinrichtung, wie beispielsweise ein Förderband, eine Betriebsstoffzuführeinrichtung oder eine Förderschnecke, kann den Abstand zwischen der Transportmaschine und der Arbeitsmaschine überbrücken. Wenn die Transportmaschine in der Ladeposition ist, kann die Transportmaschine oder die Arbeitsmaschine das Koppelungssignal aussenden. Ansprechend auf das Ladesignal kann die Ladeeinrichtung in Betrieb genommen werden, um das Transportgut von der einen Maschine in die andere Maschine zu fördern. Auch der Transportbedarf von mehreren Arbeitsmaschinen kann durch eine Transportmaschine gedeckt werden. Beispielsweise kann die Transportmaschine die Arbeitsmaschinen nacheinander anfahren.

Das Verfahren kann einen Schritt des Abfragens eines Ladezustands von zumindest einer Transportmaschine aufweisen, um eine transportbereite Transportmaschine zu erkennen, wobei im Schritt des Sendens das Steuersignal an die transportbereite Transportmaschine gesendet wird. Mehrere Transportmaschinen können zur Deckung des Transportbedarfs einer Arbeitsmaschine eingesetzt werden. Damit die Transportmaschine, die zur Arbeitsmaschine geführt wird, noch Transportkapazität aufweist, kann ein Ladezustand mehrerer Transportmaschinen abgefragt werden. Die Transportmaschine mit der anforderungsgerechtesten Transportkapazität kann zur Arbeitsmaschine geführt werden. Beispielsweise kann eine Transportmaschine gerade noch so viel Transportkapazität aufweisen, wie die Arbeitsmaschine an Transportbedarf anfordert. Damit kann die Transportmaschine gefüllt werden und ist zum weiteren Transport bereit.

Das Steuersignal umfasst eine Pfadinformation über einen Pfad der Arbeitsmaschine, um die Transportmaschine während des Ladevorgangs parallel zu dem Pfad zu führen. Unter einer Pfadinformation kann eine geplante Trajektorie der Arbeitsmaschine in einem Arbeitsumfeld verstanden werden, auf der sich die Arbeitsmaschine voraussichtlich bewegen wird. Mithilfe der Pfadinformation kann die Transportmaschine beispielsweise tangential an die Trajektorie heranfahren und bereits mit parallel zu der Trajektorie ausgerichteten Transportbehältern in die Ladeposition fahren.

Das Verfahren kann einen Schritt des Ermittelns einer Anfahrtsroute der Transportmaschine zu der Arbeitsmaschine aufweisen, wobei das Steuersignal eine Trajektorie der Anfahrtsroute zu der Arbeitsmaschine umfassen kann, um die Transportmaschine auf der Anfahrtsroute zu der Arbeitsmaschine zu führen. Alternativ oder ergänzend kann das Verfahren einen Schritt des Ermittelns einer Abfahrtsroute der Transportmaschine von der Arbeitsmaschine weg aufweisen, wobei das Steuersignal eine Trajektorie der Abfahrtsroute von der Arbeitsmaschine umfassen kann, um die Transportmaschine anschließend an den Ladevorgang auf der Abfahrtsroute von der Arbeitsmaschine weg zu führen. Eine Anfahrtsroute und alternativ oder ergänzend eine Abfahrtsroute kann unter Berücksichtigung von Routenvorgaben ermittelt werden. Dabei kann beispielsweise eine bevorzugte Fahrtrasse berücksichtigt werden. Ebenso kann eine Verteilung der Bodenbelastung angestrebt werden, wodurch mehrere Routen beispielsweise so versetzt werden, dass Reifenspuren möglichst wenig überlappen. Bei der Ermittlung der Routen können auch Geländemerkmale berücksichtigt werden. Beispielsweise können Steigungen schräg angefahren werden, oder Erhöhungen bzw. Vertiefungen im Gelände umfahren werden.

Das Steuersignal kann eine Information über einen, für die Arbeitsmaschine befahrbaren, Bereich umfassen, um die Transportmaschine innerhalb des befahrbaren Bereichs zu führen. Ein befahrbarer Bereich kann beispielsweise Hindernisse ausschließen. Bei einer Erntemaschine kann der befahrbare Bereich außerhalb eines noch zu erntenden Bereichs angeordnet sei, damit das Transportfahrzeug nicht die Ernte zerstört. Der befahrbare Bereich kann in einem Schritt des Bestimmens des befahrbaren Bereichs bestimmt werden, wobei beispielsweise eine Umfelderfassungseinrichtung und/oder ein Geländemodell verwendet werden kann. Das Geländemodell kann in einer Karte hinterlegt sein.

Das Verfahren weist einen Schritt des Sendens eines Ladeunterbrechungssignals zum Unterbrechen des Ladevorgangs auf, wenn ein Richtungsänderungssignal der Arbeitsmaschine empfangen wird, das eine bevorstehende Richtungsänderung der Arbeitsmaschine signalisiert. Das Ladeunterbrechungssignal kann gesendet werden, wenn ein Radius der Richtungsänderung kleiner als ein vorbestimmter Laderadius ist.

Ansprechend auf eine Durchführung der Richtungsänderung kann über das Steuersignal ein Folgebefehl zum Nachführen der Transportmaschine in die Ladeposition gesendet werden.

Der Transportbedarf kann zumindest aus einem Betriebsstoffbedarf der Arbeitsmaschine resultieren. Das Steuersignal kann an eine Transportmaschine mit einem Betriebsstoffvorrat gesandt werden, um diese zu der Arbeitsmaschine zu führen, wobei während des Ladevorgangs solange Betriebsstoff in die Arbeitsmaschine geladen wird, bis eine vorbestimmte Füllmenge des Betriebsstoffs in der Arbeitsmaschine erreicht ist oder eine vorbestimmte Minimalmenge des Betriebsstoffs in der Transportmaschine erreicht ist. Ein Betriebsstoffbedarf kann beispielsweise ein Treibstoffmangel und/oder ein Schmierstoffmangel und/oder ein Kühlmittelmangel sein. Die Transportmaschine kann eine eigene Einrichtung zum Bevorraten von Betriebsstoffen aufweisen. Die Transportmaschine kann auch vergrößerte eigene Betriebsstoffvorräte aufweisen, die anteilig an die Arbeitsmaschine abgegeben werden können. Zum Übergeben der Betriebsstoffe kann die Transportmaschine und/oder die Arbeitsmaschine eine Schnittstelle für die Betriebsstoffe aufweisen. Die Transportmaschine kann auch eine Einrichtung zur Übergabe der Betriebsstoffe aufweisen. Wenn die Transportmaschine in der Ladeposition ist, kann die Schnittstelle ebenfalls in einer Übergabeposition sein, sodass mehrere Ladeprozesse oder Übergabeprozesse simultan ablaufen können.

Der Transportbedarf kann zumindest aus einem Überschreiten einer vorbestimmten Lademenge eines Transportguts in der Arbeitsmaschine resultieren. Das Steuersignal kann eine Transportmaschine mit vorhandener Ladekapazität für das Transportgut zu der Arbeitsmaschine führen, und der Ladevorgang kann durchgeführt werden, bis eine vorbestimmte Transportmenge der Transportmaschine für das Transportgut erreicht wird oder kein Transportbedarf mehr besteht. Eine vorbestimmte Lademenge kann beispielsweise eine Lademenge sein, bei der noch genügend Ladekapazität verfügbar ist, um ohne Unterbrechung die Arbeitsmaschine betreiben zu können, bis die Transportmaschine in der Ladeposition ist. Der Ladevorgang kann unterbrochen werden, wenn die Transportmaschine voll ist, oder die Arbeitsmaschine leer ist.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen..Auch durch diese Ausführungsvariante der Erfindung in Form einer Vorrichtung kann die der Erfindung zugrunde liegende Aufgabe schnell und effizient gelöstwerden.

Unter einer Vorrichtung kann vorliegend ein elektrisches Gerät verstanden werden, das Sensorsignale verarbeitet und in Abhängigkeit davon Steuer-und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oderzumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ein Transportlogistiksystem weist die folgenden Merkmale auf:
eine Arbeitsmaschine, die einen fortlaufenden Transportbedarf aufweist, und eine Schnittstelle zum Senden eines Anforderungssignals und zum Empfangen eines Ladesignals aufweist;
eine Transportmaschine zum Decken des Transportbedarfs, die eineSchnittstelle zum Empfangen eines Steuersignals und eines Ladesignals sowie ein Steuergerät zum Führen der Transportmaschine aufweist; und
eine Vorrichtung gemäß dem hier vorgestellten Ansatz.

Eine Transportmaschine kann ein Zugfahrzeug für Anhänger sen. Ebenso kann die Transportmaschine ein Selbstfahrer sein, der eine eigene Ladefläche aufweist, auf der Behälter für das Transportgut transportiert werden können. Ein Steuergerät zum Führen der Transportmaschine kann eine Selbstfahreinrichtung sein, die die Transportmaschine unter Verwendung des Steuersignals lenkt. Ebenso kann das Steuergerät eine Mensch-Maschine Schnittstelle sein, die einem Fahrer der Transportmaschine Fahranweisungen bereitstellt.

Die Vorrichtung kann in der Arbeitsmaschine angeordnet sein. Dann kann eine Arbeitsmaschine mehrere Transportmaschinen steuern.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Darstellung eines Logistiksystems gemäß einem Ausführungsbeispiel der Erfindung;
- Fig. 2: ein Ablaufdiagramm eines Verfahrens zum Koordinieren einer Transportlogistik gemäß einem Ausführungsbeispiel der Erfindung; und
- Fig. 3: ein Blockschaltbild einer Vorrichtung zum Koordinieren einer Transportlogistik gemäß einem Ausführungsbeispiel der Erfindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder siezu weiteren, hier nicht explizit beschriebenen Kombinationen zusammengefasst werden können.

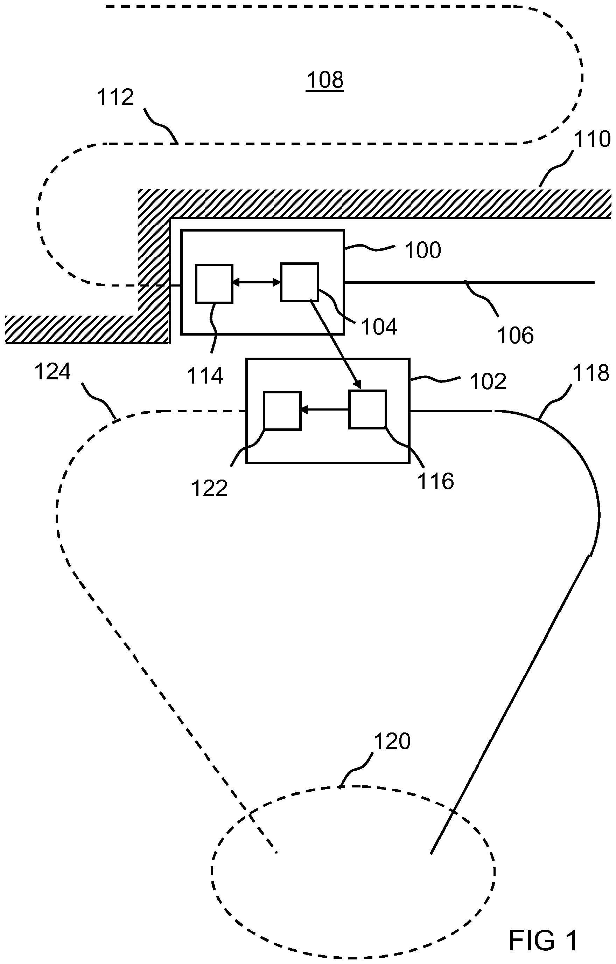

Fig. 1 zeigt eine schematische Darstellung einer Situation, in der ein Transportbedarf einer Arbeitsmaschine 100 von einer Transportmaschine 102 gemäß einem Ausführungsbeispiel der vorliegenden Erfindung gedeckt wird. Die dargestellte Transportlogistik wird von einer Vorrichtung 104 zum Koordinieren koordiniert. Gemäß diesem Ausführungsbeispiel ist die Vorrichtung 104 zum Koordinieren in der Arbeitsmaschine 100 angeordnet. Alternativ kann die Vorrichtung 104 zum Koordinieren in der Transportmaschine 102 oder auch getrennt von der Arbeitsmaschine 100 und der Transportmaschine 102 angeordnet sein.

Die Arbeitsmaschine 100 bewegt sich auf einem Pfad 106 vorwärts und wird sich in ein unbearbeitetes Gebiet 108 hinein bewegen. Das unbearbeitete Gebiet 108 ist durch eine Gebietsgrenze 110 abgegrenzt. Die Arbeitsmaschine 100 wird auf einer geplanten Trajektorie 112 durch das unbearbeitete Gebiet fahren und das unbearbeitete Gebiet 108 dabei bearbeiten, um es in ein bearbeitetes Gebiet zu verändern. Die Trajektorie 112 kann durch die Vorrichtung 104 zum Koordinieren bestimmt und an eine Fahrsteuerung der Arbeitsmaschine 100 ausgegeben werden, um die Arbeitsmaschine 100 auf der Trajektorie 112 zu führen. Alternativ kann die Vorrichtung 104 zum Koordinieren Daten über die Trajektorie 112 über eine Schnittstelle empfangen.

In diesem Ausführungsbeispiel ist die Arbeitsmaschine 100 eine Erntemaschine 100, die eine landwirtschaftliche Nutzfläche auf dem Pfad 106 abgeerntet hat und auf der geplanten Trajektorie 112 abernten wird. Die Gebietsgrenze 110 ist dabei ein Rand eines ungeernteten Bereichs 108. Während sich die Arbeitsmaschine 100 auf der geplanten Trajektorie 112 bewegt, nimmt die Arbeitsmaschine ein Transportgut, in diesem Ausführungsbeispiel eine Feldfrucht von dem unbearbeiteten Gebiet 108 auf und speichert das Transportgut in einem Zwischenspeicher. Wenn der Zwischenspeicher einen bestimmten Füllgrad erreicht hat, beispielsweise mehr als dreiviertel voll ist, meldet ein Steuergerät 114 der Arbeitsmaschine 100 mittels einem Anforderungssignal an die Vorrichtung 104 einen Transportbedarf an. Die Vorrichtung 104 ist ausgebildet, um ansprechend auf das Anforderungssignal ein Steuersignal an einen Empfänger 116 der Transportmaschine 102 auszusenden, um die Transportmaschine 102 zu der Arbeitsmaschine 100 zu führen, bevor der Zwischenspeicher voll ist. Die Arbeitsmaschine 100 kann einen Sensor aufweisen, der ausgebildet ist, um den Füllgrad des Zwischenspeichers zu erfassen und ein entsprechendes Signal an das Steuergerät 114 bereitzustellen.

Die Vorrichtung 104 ist ausgebildet, um eine Anfahrtsroute 118 zu ermitteln, die die Transportmaschine 102 von einer Bereitstellungszone 120 so an die Arbeitsmaschine 100 heranführt, dass die Transportmaschine 102 unter Vermeidung von eventuellen Hindernissen in eine Ladeposition relativ zu der Arbeitsmaschine 100 erreicht. Die Anfahrtsroute 118 kann auch so ermittelt werden, dass die Transportmaschine 102 nicht in das unbearbeitete Gebiet 108 eindringt, wobei in diesem Ausführungsbeispiel eine Zerstörung der Feldfrucht verhindert wird. Eine Trajektorie der Anfahrtsroute 118 kann von der Vorrichtung 104 zusammen mit dem Steuersignal an den Empfänger 116 der Transportmaschine 102 zu übermitteln. Die Transportmaschine 102 wird auf der Anfahrtsroute 118 zu der Arbeitsmaschine 100 geführt. Dazu kann die Trajektorie der Anfahrtsroute 118 von dem Empfänger 116 der Transportmaschine 102 an ein Steuergerät 122 der Transportmaschine 102 übermittelt werden. Das Steuergerät 122 ist ausgebildet, um die Transportmaschine 102 automatisiert entlang der Trajektorie der Anfahrtsroute 118 zu führen. Alternativ kann der Empfänger 116 ausgebildet sein, um die Trajektorie der Anfahrtsroute 118 an eine Kommunikationseinrichtung zu einem Fahrer der Transportmaschine 102 zu übermitteln, sodass der Fahrer die Transportmaschine 102 entlang der Trajektorie der Anfahrtsroute 118 zu der Arbeitsmaschine 100 führen kann.

Zusammen mit der Trajektorie der Anfahrtsroute 118 kann ein Wert einer Annäherungsgeschwindigkeit über das Steuersignal an den Empfänger 116 der Transportmaschine 102 übermittelt werden. Da die Arbeitsmaschine 100 auf dem Pfad 106 mit einer Arbeitsgeschwindigkeit fährt, wird die Transportmaschine 102 parallel zu dem Pfad 106 von hinten mit einer Transportgeschwindigkeit an die Arbeitsmaschine herangeführt, bis die Transportmaschine 102 in der Ladeposition angekommen ist. Inder Ladeposition bewegt sich die Transportmaschine 102 mit der Arbeitsgeschwindigkeit der Arbeitsmaschine 100, um die Ladeposition einzuhalten.

Ein Erreichen der Ladeposition durch die Transportmaschine 102 wird von einer geeigneten Positionseinrichtung erkannt und durch ein Koppelungssignal angezeigt. Beispielsweise kann dazu eine aktuelle Position und Geschwindigkeit der Arbeitsmaschine 100 mit einer aktuellen Position und Geschwindigkeit der Transportmaschine 102 verglichen werden. Dazu kann die Transportmaschine 102 eine Einrichtung zur Übermittlung von realen Positionsdaten oder von Positionsdaten in Bezug auf die Trajektorie derAnfahrtsroute 118 an die Positionseinrichtung aufweisen. Die Vorrichtung 104 ist ausgebildet, um das Koppelungssignal zu empfangen. Ansprechend auf das Koppelungssignalist die Vorrichtung 104 ausgebildet, um ein Ladesignal an Ladeeinrichtungen der Arbeitsmaschine 100 und der Transportmaschine 102 auszugeben, um einen Umladevorgang zwischen der Arbeitsmaschine 100 und der Transportmaschine 102 zu starten. Dabei wird in diesem Ausführungsbeispiel das Transportgut aus dem Zwischenspeicher der Arbeitsmaschine 100 in die Transportmaschine 102 umgeladen. Wenn der Zwischenspeichergeleert ist, oder eine Transportkapazität der Transportmaschine 102 erschöpft ist, wird der Ladevorgang beendet.

Erkennt die Vorrichtung 104 anhand der geplanten Trajektorie 112, dass die Arbeitsmaschine eine Richtungsänderung durchführen wird, weil die geplante Trajektorie 112 beispielsweise eine Kehre aufweist, so ist die Vorrichtung 104 ausgebildet, um ein Ladungsunterbrechungssignal an die Ladeeinrichtungen bereitzustellen. Dadurch kann der Ladevorgang unterbrochen werden und die Transportmaschine 102 kann während der Richtungsänderung beispielsweise einen vergrößerten Abstand zur Arbeitsmaschine 100 halten. Nachdem die Arbeitsmaschine 100 die Richtung geändert hat, kann die Transportmaschine 102 erneut in eine Ladeposition fahren, und der Ladevorgang kann fortgesetzt werden. Dabei kann die Ladeposition in einer anderen Relativposition zu der Arbeitsmaschine 100 angeordnet sein, um außerhalb des unbearbeiteten Gebiets 108 angeordnet zu sein. Eine Trajektorie zur Führung der Transportmaschine 102, während die Arbeitsmaschine 100 die Kehre ausführt, kann von der Vorrichtung 104 ermittelt und an die Transportmaschine 102 übermittelt werden.

In entsprechender Weise kann die Transportmaschine ein Transportgut von der Bereitstellungszone 120 zu der Arbeitsmaschine 100 bringen. Beispielsweise kann die Arbeitsmaschine 100 einen Treibstoffbedarf und/oder einen Schmiermittelbedarf und/oder einen Kühlmittelbedarf melden. Dann kann die Transportmaschine 102 Treibstoff, Schmiermittel und/oder Kühlmittel zu der Arbeitsmaschine 100 bringen und an die Arbeitsmaschine übergeben. Betriebsstoffe, wie Treibstoff, Schmiermittel und/oder Kühlmittel können bereits an Bord der Transportmaschine 102 gebunkert sein. Ebenso können die Betriebsstoffe in der Bereitstellungszone 120 aufgenommen werden.

In einem anderen Ausführungsbeispiel nimmt die Transportmaschine 102 in der Bereitstellungszone 120 das Transportgut, beispielsweise einen Baustoff wie Asphalt oder ein landwirtschaftliches Verbrauchsgut wie Dünger, auf und transportiert das Transportgut zu der Arbeitsmaschine 100, die das Transportgut verbraucht, während sie die geplante Trajektorie 112 abfährt. Dabei kann der Bereich 108 ein unbefahrbares, bearbeitetes Gebiet sein, das die Arbeitsmaschine 100 bearbeitet hat.

Wenn der Ladevorgang beendet ist, kann die Vorrichtung 104 eine Trajektorie einer Abfahrtsroute 124 über das Steuersignal an die Transportmaschine 102 senden. Die Abfahrtsroute kann so geplant werden, dass die Transportmaschine 102 unter Vermeidung von Hindernissen und ohne in das Gebiet 108 zu fahren die Bereitstellungszone 120 erreicht.

Sowohl die Arbeitsmaschine 100 als auch die Transportmaschine 102 weisen geeignete Einrichtungen zur drahtlosen Kommunikation miteinander auf. Zur Steuerung der Arbeitsmaschine 100 als auch der Transportmaschine 102 können diese, neben den beschriebenen Einrichtungen weitere geeignete Sensoren, Auswerteeinrichtungen und Steuerungen aufweisen, beispielsweise um die Bewegungen der Maschinen 100, 102 als auch den Ladevorgang zu überwachen. Zur Ermittlung und Einhaltung der jeweiligen Trajektorien 112, 118, 124 kann eine Positionsbestimmungseinrichtung, beispielsweise ein satellitengestütztes Navigationssystem eingesetzt werden.

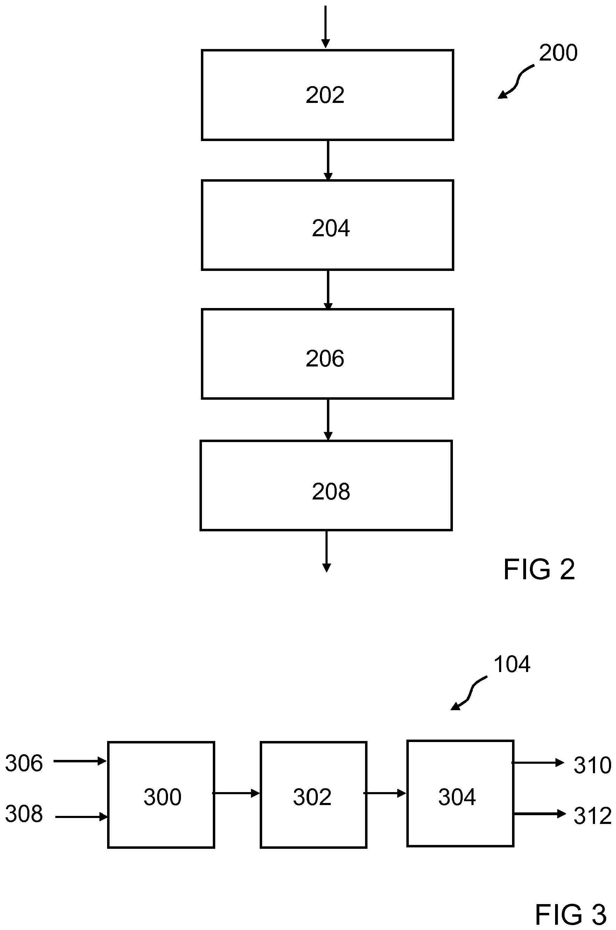

Fig. 2 zeigt ein Ablaufdiagramm eines Verfahrens 200 zum Koordinieren einer Transportlogistik gemäß einem Ausführungsbeispiel der Erfindung. Das Verfahren 200 kann auf einer Vorrichtung zum Koordinieren, wie sie in Fig. 1 dargestellt ist ausgeführt werden. Das Verfahren 200 weist einen Schritt 202des Empfangens eines Anforderungssignals, einen Schritt 204des Sendens eines Steuersignals, einen Schritt 206 des Empfangens eines Koppelungssignals und einen Schritt 208 des Sendens eines Ladesignals auf.

Im Schritt 202 des Empfangens des Anforderungssignals wird ein Anforderungssignal von einer Arbeitsmaschine empfangen. Das Anforderungssignal signalisiert einen Transportbedarf der Arbeitsmaschine. Im Schritt 204 des Sendens eines Steuersignals wird ein Steuersignal an eine Transportmaschine gesendet, um die Transportmaschine zu der Arbeitsmaschine zu führen, wenn das Anforderungssignal empfangen wurde. Im Schritt 206 des Empfangens eines Koppelungssignals wird ein Koppelungssignal empfangen, wenn die Transportmaschine eine Ladeposition relativ zu der Arbeitsmaschine erreicht hat. Im Schritt 208 des Sendens eines Ladesignals wird ein Ladesignal gesendet, um einen Ladevorgang zum Decken des Transportbedarfs zu starten, wenn das Koppelungssignal empfangen wurde.

Fig. 3 zeigt ein Blockschaltbild einer Vorrichtung 104 zum Koordinieren einer Transportlogistik gemäß einem Ausführungsbeispiel der Erfindung. Die Vorrichtung 104 kann der in Fig. 1 gezeigten Vorrichtung zum Koordinieren entsprechen. Somit kann die Vorrichtung 104 ausgebildet sein, um eine Zusammenarbeit zwischen einer Arbeitsmaschine und einer Transportmaschine koordinieren. Die Vorrichtung 104 weist eine Schnittstelle 300 zum Empfangen, eine Logik 302 und eine Schnittstelle 304 zum Senden auf.

Die Schnittstelle 300 zum Empfangen ist dazu ausgebildet, ein Anforderungssignal 306 und ein Koppelungssignal 308 zu empfangen. Das Anforderungssignal 306 kann eine Information darüber enthalten, dass die Arbeitsmaschine die Unterstützung der Transportmaschine benötigt. Das Koppelungssignal 308 kann eine Information darüber enthalten, dass die Transportmaschine die Arbeitsmaschine erreicht hat, und beispielsweise ein Umladevorgang zwischen der Transportmaschine und der Arbeitsmaschine beginnen kann. Kopplung kann dabei bedeuten, dass die Bewegungen der Arbeitsmaschine und der Transportmaschine gekoppelt sind, die Arbeitsmaschine und die Transportmaschine also beispielsweise mit aneinander angepasster Geschwindigkeit nebeneinander her fahren.

Das Anforderungssignal 306 und das Koppelungssignal 308 werden von der Schnittstelle 300 zum Empfangen an die Logik 302 ausgegeben. Die Logik ist dazu ausgebildet, ein Steuersignal 310 zu erzeugen und an die Schnittstelle 304 zum Senden auszugeben, wenn das Anforderungssignal 306 empfangen wird. Das Steuersignal 310 ist geeignet, um die Transportmaschine an die Arbeitsmaschine heranzuführen. Die Logik ist ebenfalls dazu ausgebildet, ein Ladesignal 312 zu erzeugen und an die Schnittstelle 304 zum Senden auszugeben, wenn das Koppelungssignal 308 empfangen wird. Das Ladesignal 312 ist geeignet, um den Umladevorgang zwischen der Transportmaschine und der Arbeitsmaschine zu beginnen.

Die Schnittstelle zum Senden 304 ist dazu ausgebildet, das Steuersignal 310 und das Ladesignal 312 auszusenden. Das Steuersignal 310 wird dabei beispielsweise drahtlos an die Transportmaschine gesendet, um die Transportmaschine zu leiten. Das Ladesignal 312 wird beispielsweise drahtlos oder drahtgebunden an eine Ladeeinrichtung gesendet, um den Umladevorgang einzuleiten. Die Ladeeinrichtung ist dabei an der Arbeitsmaschine oder an der Transportmaschine angeordnet. Auch können Teile der Ladeeinrichtung an der Arbeitsmaschine und Teile der Ladeeinrichtung an der Transportmaschine angeordnet sein.

Mit anderen Worten zeigen die Figuren 1 bis 3 ein Verfahren und ein System zum automatisierten Be- und Entladen von zumindest einer Erntemaschine 100 mittels zumindest einer Transportmaschine 102. Anhand der Figuren 1 bis 3 werden im Folgenden unterschiedliche Ausführungsbeispiele der vorliegenden Erfindung näher beschrieben. Alle beschriebenen Ausführungsbeispiele können dabei miteinander kombiniert werden.

Gemäß einem Ausführungsbeispiel kann eine automatische Turmsteuerung von Erntemaschinen 100 mittels Stereovideo oder 3D-Lidar durchgeführt werden. Mit der Turmsteuerung kann in Abhängigkeit eines parallel fahrenden Fahrzeugs, beispielsweise des Transportfahrzeugs 102, eine Auswurfsteuerung automatisiert werden. Mittels dem hier vorgestellten Ansatz können Be- und Entladezyklen bei Fahrzeugen 100, 102 für die Ernte und bei Baumaschinen 100, 102 automatisiert werden, sodass diese die wiederkehrenden, zeitaufwendigen Aufgaben übernehmen können.

Durch die automatische Entladung von Erntemaschinen 100 kann eine Vereinfachung der Feldernte erreicht werden. Weiterhin bestehen geringere Anforderungen an einen Landmaschinenfahrer. Dieser fungiert z. B. nur noch als Transportfahrer oder der Fahrer kann komplett eingespart werden. Durch eine Automatisierung kann ein Prozess der Warenübergabe zwischen fahrenden Maschinen 100, 102 vereinfacht und verbessert werden. Ein Fahrer der Erntemaschine 100 wird entlastet und kann sich auf das Ernten konzentrieren.

Beim Abernten eines Feldes werden immer zumindest zwei Fahrzeuge 100, 102 benötigt. Zum einen die Erntemaschine 100 zum anderen ein Transportfahrzeug 102, welches das Erntegut vom Feld abtransportiert, bzw. die Ladung von der Erntemaschine 100 aufnimmt. Der hier vorgestellte Ansatz stellt ein Verfahren 200 dar, mithilfe dessen das Transportfahrzeug 102 innerhalb der Grenzen des Feldes automatisiert betrieben werden kann. Dadurch soll der Fahrer der Erntemaschine 100 entlastet/ersetzt werden und ggf. auch die Größe der Speicherkapazität der Erntemaschine 100 reduziert werden um deren Gewicht und damit die Bodenverdichtung zu verringern.

Die Transportfahrzeuge 102 folgen während des Entladevorgangs der Erntemaschine 100 und bringen den befüllten Anhänger bzw. Transportbehälter an eine Übergabestelle 120. Dort kann der Anhänger oder Behälter durch einen Traktor oder Lkw aufgenommen werden und zu seinem Bestimmungsort gebracht werden.

Beide Fahrzeuge 100, 102 verfügen über ein Kommunikationssystem z. B. Funk, WLAN, o.Ä., und können darüber Informationen über Ihren Zustand und Position mitteilen. Entweder das Erntefahrzeug 100 oder das Transportfahrzeug 102 oder beide verfügen über Sensorik, die einen automatisierten Beladungsprozess ermöglicht. Vorzugsweise ist die Sensorik in der Erntemaschine 100 untergebracht, da so nur einmal Kosten für diese entstehen. Die Sensorik ist beispielsweise über Laser oder Stereovideo ausgeführt. Diese ist dann in der Lage, die Kontur einer Beladungsfläche und die Höhe bzw. Kontur der Befüllung der Ladefläche zu ermitteln und so die Befüllung des Anhängers durchzuführen und zu kontrollieren.

Beide Fahrzeuge 100, 102 verfügen über ein Positionsbestimmungssystem z. B. GPS und/oder Odometrie, um Ihre Position ermitteln und austauschen zu können. Zusätzlich kann das Transportfahrzeug 100 über Umfeldsensorik, z. B. zur Kollisionsvermeidung, verfügen. Dies ist nicht unbedingt notwendig, denn eine reduzierte Funktion zur Kollisionsverhinderung kann rein auf digitalen Kartendaten, in die auf dem Einsatzgebiet auftretende Hindernisse, wie beispielsweise ein Feldrand oder Hochspannungsmasten, eingetragen sind, basieren. So kann das Transportfahrzeug 102 oder die Vorrichtung 104 kollisionsfreie Wege planen.

Die Steuerung des automatischen Fahrzeugs 102 bzw. der automatischen Fahrzeuge 102 kann durch den Fahrer bzw. den Rechner 104 der Erntemaschine 100 erfolgen. Geht die Speicherkapazität der Erntemaschinenbeladung zur Neige, dann fordert diese ein Transportfahrzeug 102 zur Übergabe der Ladung an. Dazu wird der Status der verfügbaren Transportmaschinen 102 überprüft und dann die nächste verfügbare Transportmaschine 102 per Funk angefordert, indem der Maschine 102 die Position der Erntemaschine 100 mitgeteilt wird. Diese Kommunikation findet fortlaufend statt, bis die Maschinen 100, 102 gekoppelt sind und eine Übergabe der Ladung gestartet wird.

Je nach Ausführungsbeispiel kann die Transportmaschine 102 die Zieltrajektorie 118, 124 eigenständig berechnen oder sie erhält von der Erntemaschine 100 eine Vorgabe der Trajektorie 118, 124. Bei der Planung der Trajektorie 118, 124 können spezielle Wünsche berücksichtigt werden. Beispielsweise kann es gewünscht sein, gewisse Transportkorridore zu verwenden, um die Bodenverdichtung auf diese Korridore zu beschränken. Oder es kann gewünscht sein die Bodenverdichtung möglichst gleichmäßig zu verteilen.

Die für die Planung nötigen Daten, wie freie, befahrbare Fläche, bearbeitete Fläche, nicht befahrbare Fläche 108 (z. B. noch nicht abgeerntet), Position und Trajektorien anderer Fahrzeuge können z. B. per Funk zur Verfügung gestellt werden. Dies erfolgt vorzugsweise über eine Erntemaschine 100, die als Zentrale dient. Der Fahrzeugverbund 100, 102 wird von dieser überwacht und ähnlich einer Leitstelle von dieser verwaltet. Werden die Trajektorien 112, 118, 124 von der Zentrale berechnet, so werden diese auf Kollisionsfreiheit z. B. mit Objekten oder anderen Transportfahrzeugen 102 überprüft. Erfolgt die Planung durch die Transportfahrzeuge 102, so können diese über eine geeignete Sensorik zur Erkennung von anderen Maschinen und ein Verfahren zur Vorfahrtsregelung verfügen. Die Sensorik kann eine Umfeldsensorik sein, aber z. B. auch eine Funkkommunikation, beispielsweise C2X. Durch Funksignale übertragen die Transportfahrzeuge 102 beispielsweise Ihre Fahrtrichtung, Trajektorie 124 und Ihren Status. Nähern sich nun zwei Fahrzeuge 100, 102 so erhalten Sie die Trajektorie 106, 112, 118, 124 des jeweils Anderen und können bei einer Kreuzung der Trajektorien 106, 112, 118, 124 bzw. Berührung der Fahrschläuche Gegenmaßnahmen einleiten. Dies kann eine Reduzierung der Geschwindigkeit des einen Fahrzeugs 100, 102 und die Erhöhung der Geschwindigkeit des andern Fahrzeugs 102, 100 bedeuten oder es kann die die neuerliche Planung und Veränderung der Trajektorien 112, 118, 124 bedeuten, jedoch kann dieser Schritt vorzugsweise erst nach Klärung einer Priorität der Fahrzeuge 100, 102 erfolgen. Z. B. kann die Priorität eines leeren Fahrzeugs 102 größer sein, als die eines beladenen Fahrzeugs 102 oder die Schnittrichtung der Trajektorien 106, 112, 118, 124 kann die Vorfahrtsberechtigung in Analogie zum normalen Straßenverkehr ergeben.

Weiterhin kann auch ein Feldende per Sensorik erfasst werden, oder es kann basierend auf der Ortung bzw. der digitalen Karte eine Wendesequenz ausgelöst werden, wenn das Transportfahrzeug 102 während der Übergabe der Ladung auf das Feldende zusteuert. Solch ein Wendemanöver kann derart ablaufen, dass der Erntemaschine 100 mitgeteilt wird, dass die Übergabe der Ladung zu unterbrechen ist. Ebenso kann die Erntemaschine 100 einen bevorstehenden Richtungswechsel ankündigen. Dann verringert das Transportfahrzeug 102 seine Geschwindigkeit und führt ein Wendemanöver durch, sobald die Erntemaschine 100 gewendet hat. Der Übergabeprozess kann anschließend fortgeführt werden.

Sind die Transportfahrzeuge 102 beladen, so wird eine Trajektorie 124 zum Übergabeplatz 120 der zu Beginn der Arbeiten festgelegt wurde berechnet. Das Transportfahrzeug 102 stellt den Anhänger bzw. den Transportbehälter dort ab und nimmt einen neuen Transportbehälter auf.

Es sind mehrere verschiedene Szenarien denkbar, wie der Abladevorgang vonstattengehen kann. Es kann dieser Ort z. B. per Positionsbestimmung bezeichnet sein und die Ausrichtung und die Anzahl an Anhängern bzw. Transportbehältern (Warteschlange und Position) werden durch die Zentrale per Funk übertragen bzw. überwacht. Das heißt, das Transportfahrzeug 102 erhält eine definierte Abladeposition 120, an welcher der beladene Anhänger abgestellt werden soll und nach erfolgtem Abkoppeln eine neue Position 120 an der ein neuer Anhänger angekoppelt werden soll. Ist keine hochgenaue Ortung verfügbar, so kann die Position 120 z. B. per Landmarken, die durch eine Sensorik der Transportmaschine 102 erfasst werden, bestimmt werden. Dadurch werden die grobe Ortung und der Fehler der Positionierung beim Abstellen reduziert, da aufgrund der Position der Landmarke die Anhänger relativ zu dieser mit geringem Fehler z. B. anhand der damit abgeglichenen Odometriedaten positioniert werden können.

Alternativ können auch die Position 120 oder die Positionen z. B. per RFID-Tags die dort beispielsweise in den Boden gesteckt sind definiert sein. Die Belegung der Abstellplätze kann alternativ zur zentralen Verwaltung auch durch eine die Kontur erfassende Sensorik des Transportfahrzeugs 102 erkannt werden und ähnlich einer Parklückensuche umgesetzt werden. Um zwischen leeren und vollen Behältern zu unterscheiden, können diese an unterschiedlichen Positionen 120 abgestellt oder unterschiedlich angeordnet sein, z. B. Deichsel nach rechts entspricht voll und Deichsel nach links entspricht leer.

Neben dem automatisierten Entladen können die Erntemaschinen 100 mit den gleichen Bordmitteln und Verfahren wie zum Entladen auch automatisiert beladen werden. Dies bedeutet das automatisierte Transportieren von verschiedenen Gütern zur Erntemaschine 100 durch die Transportmaschine 102. Die Güter können von der Transportmaschine 102 am Übergabeplatz 120 der Ernte am Feldrand aufgenommen werden, bevor die Transportmaschine 102 zum Beladen zur Erntemaschine 100 fährt. Die Güter können z. B. Treibstoff, Schmiermittel, Kühlmittel, etc. sein. Während des Überladens der Ernte können die Güter an die Erntemaschine 100 übergeben werden. Dies verringert die Standzeiten der Erntemaschine 100 und der Transport wird während der Leerfahrt des Transportfahrzeuges 102 vorgenommen.

Die Notwendigkeit z. B. zum Auffüllen des Treibstoffbehälters übermittelt das Erntefahrzeug 100 über die gleichen Kanäle wie die oben beschriebenen Nachrichten. Das dadurch aktivierte Transportfahrzeug 102 sorgt zeitnah für die Beschaffung der angeforderten Güter. Das Übergabeverfahren der Güter kann analog zur Übergabe der Ernte erfolgen, also z. B. durch ein koordiniertes Querführen und Längsführen der beiden Maschinen 100, 102 über die vorhandene Kommunikationseinrichtung für das Entladen des Erntegutes und zum Beispiel einem schwenkbaren Tankrüssel im Falle der Treibstoffübergabe.

Die gezeigten Ausführungsbeispiele sind nur beispielhaft gewählt und können miteinander kombiniert werden. Auch wenn es nicht explizit beschrieben ist, können die beschriebenen Schritte, Vorgänge und Bewegungen der Maschinen 100, 102 durch geeignete Einrichtungen der Maschinen 100, 102 oder einer externen Leitstelle bestimmt, gesteuert und/oder ausgeführt werden.

## Patentansprüche

1. Verfahren (200) zum Koordinieren einer Transportlogistik, wobei das Verfahren (200) die folgenden Schritte aufweist:
Empfangen (202) eines Anforderungssignals (306) einer Arbeitsmaschine (100) über eine Schnittstelle einer Vorrichtung (104) zum Koordinieren, wobei das Anforderungssignal (306) einen Transportbedarf der Arbeitsmaschine (100) signalisiert;
Senden (204) eines Steuersignals (310) über eine Schnittstelle der Vorrichtung (104) an eine Transportmaschine (102), um die Transportmaschine (102) zu der Arbeitsmaschine (100) zu führen, wenn das Anforderungssignal (306) empfangen wurde, wobei das Steuersignal (310) eine Pfadinformation über einen Pfad (106, 112) der Arbeitsmaschine (100) umfasst, um die Transportmaschine (102) während des Ladevorgangs parallel zu dem Pfad (106) zu führen, wobei die Pfadinformation eine geplante Trajektorie (112) der Arbeitsmaschine (100) in einem Arbeitsumfeld ist, auf der sich die Arbeitsmaschine (100) voraussichtlich bewegen wird;
Empfangen (206) eines Koppelungssignals (308) über eine Schnittstelle der Vorrichtung (104), wenn die Transportmaschine (102) eine Ladeposition relativ zu der Arbeitsmaschine (100) erreicht hat;
Senden (208) eines Ladesignals (312) über eine Schnittstelle der Vorrichtung (104), um einen Ladevorgang zum Decken des Transportbedarfs zu starten, wenn das Koppelungssignal (308) empfangen wurde;
Erkennen anhand der geplanten Trajektorie (112), wenn die Arbeitsmaschine (100) eine Richtungsänderung durchführen wird;
Senden eines Ladeunterbrechungssignals zum Unterbrechen des Ladevorgangs über eine Schnittstelle der Vorrichtung (104), wenn die Richtungsänderung der Arbeitsmaschine (100) bevorsteht; und
Ermitteln einer Trajektorie zur Führung der Transportmaschine (102), während die Arbeitsmaschine (100) eine Kehre ausführt und Übermitteln der Trajektorie an die Transportmaschine (102) über eine Schnittstelle der Vorrichtung (104).

2. Verfahren (200) gemäß Anspruch 1, mit einem Schritt des Abfragens eines Ladezustands von zumindest einer Transportmaschine (102), um eine transportbereite Transportmaschine (102) zu erkennen, wobei im Schritt des Sendens (204) das Steuersignal an die transportbereite Transportmaschine (102) gesendet wird.

3. Verfahren (200) gemäß einem der vorstehenden Ansprüche, mit einem Schritt des Ermittelns einer Anfahrtsroute (118) der Transportmaschine (102) zu der Arbeitsmaschine (100), wobei das Steuersignal (310) eine Trajektorie der Anfahrtsroute (118) zu der Arbeitsmaschine (100) umfasst, um die Transportmaschine (102) auf der Anfahrtsroute (118) zu der Arbeitsmaschine (100) zu führen und/oder mit einem Schritt des Ermittelns einer Abfahrtsroute (124) der Transportmaschine (102) von der Arbeitsmaschine (100) weg, wobei das Steuersignal (310) eine Trajektorie der Abfahrtsroute (124) von der Arbeitsmaschine (100) umfasst, um die Transportmaschine (102) anschließend an den Ladevorgang auf der Abfahrtsroute (124) von der Arbeitsmaschine (100) weg zu führen.

4. Verfahren (200) gemäß einem der vorstehenden Ansprüche, bei dem das Steuersignal (310) eine Information über einen für die Transportmaschine (102) befahrbaren Bereich umfasst, um die Transportmaschine (102) innerhalb des befahrbaren Bereichs zu führen.

5. Verfahren (200) gemäß einem der vorstehenden Ansprüche, bei dem der Transportbedarf zumindest aus einem Betriebsstoffbedarf der Arbeitsmaschine (100) resultiert, und das Steuersignal (310) an eine Transportmaschine (102) mit einem Betriebsstoffvorrat gesandt wird, um diese zu der Arbeitsmaschine (100) zu führen, wobei während des Ladevorgangs solange Betriebsstoff in die Arbeitsmaschine (100) geladen wird, bis eine vorbestimmte Füllmenge des Betriebsstoffs in der Arbeitsmaschine (100) erreicht ist oder eine vorbestimmte Minimalmenge des Betriebsstoffs in der Transportmaschine (102) erreicht ist.

6. Verfahren (200) gemäß einem der vorstehenden Ansprüche, bei dem der Transportbedarf zumindest aus einem Überschreiten einer vorbestimmten Lademenge eines Transportguts in der Arbeitsmaschine (100) resultiert, und das Steuersignal (310) eine Transportmaschine (102) mit vorhandener Ladekapazität für das Transportgut zu der Arbeitsmaschine (100) führt, und der Ladevorgang durchgeführt wird, bis eine vorbestimmte Transportmenge der Transportmaschine (102) für das Transportgut erreicht wird oder kein Transportbedarf mehr besteht.

7. Vorrichtung (104) zum Koordinieren einer Transportlogistik, die ausgebildet ist, um die Schritte eines Verfahrens (200) gemäß einem der Ansprüche 1 bis 6 durchzuführen.

8. Transportlogistiksystem mit folgenden Merkmalen:
einer Arbeitsmaschine (100), die einen fortlaufenden Transportbedarf aufweist, und eine Schnittstelle zum Senden eines Anforderungssignals (306) und zum Empfangen eines Ladesignals (312) aufweist;
einer Transportmaschine (102) zum Decken des Transportbedarfs, die eine Schnittstelle zum Empfangen eines Steuersignals (310) und eines Ladesignals (312) sowie ein Steuergerät (122) zum Führen der Transportmaschine (102) aufweist; und
einer Vorrichtung (104) gemäß Anspruch 7.

9. Transportlogistiksystem gemäß Anspruch 8, bei dem die Vorrichtung (104) in der Arbeitsmaschine (100) angeordnet ist.

10. Computer-Programmprodukt mit Programmcode zur Durchführung des Verfahrens nach einem der Ansprüche 1 bis 6, wenn das Programm auf einer Vorrichtung ausgeführt wird.

## Claims

1. Method (200) for coordinating transport logistics, wherein the method (200) has the following steps of:
receiving (202) a request signal (306) from a work machine (100) via an interface of a coordination apparatus (104), wherein the request signal (306) signals a transport requirement of the work machine (100);
transmitting (204) a control signal (310) to a transport machine (102) via an interface of the apparatus (104) in order to guide the transport machine (102) to the work machine (100) when the request signal (306) has been received, wherein the control signal (310) comprises an item of path information relating to a path (106, 112) of the work machine (100) in order to guide the transport machine (102) parallel to the path (106) during the loading process, wherein the path information is a planned trajectory (112) of the work machine (100) in a work environment, on which the work machine (100) will presumably move;
receiving (206) a coupling signal (308) via an interface of the apparatus (104) when the transport machine (102) has reached a loading position relative to the work machine (100);
transmitting (208) a loading signal (312) via an interface of the apparatus (104) in order to start a loading process to cover the transport requirement when the coupling signal (308) has been received;
identifying, on the basis of the planned trajectory (112), when the work machine (100) will carry out a change of direction;
transmitting a loading interrupt signal in order to interrupt the loading process via an interface of the apparatus (104) when the change of direction of the work machine (100) is imminent; and
determining a trajectory for guiding the transport machine (102) while the work machine (100) carries out a turn, and transmitting the trajectory to the transport machine (102) via an interface of the apparatus (104).

2. Method (200) according to Claim 1, having a step of querying a loading state of at least one transport machine (102) in order to identify a transport machine (102) which is ready for transport, wherein the control signal is transmitted to the transport machine (102) which is ready for transport in the transmission step (204).

3. Method (200) according to one of the preceding claims, having a step of determining an approach route (118) of the transport machine (102) to the work machine (100), wherein the control signal (310) comprises a trajectory of the approach route (118) to the work machine (100) in order to guide the transport machine (102) to the work machine (100) on the approach route (118), and/or having a step of determining a departure route (124) of the transport machine (102) away from the work machine (100), wherein the control signal (310) comprises a trajectory of the departure route (124) from the work machine (100) in order to guide the transport machine (102) away from the work machine (100) on the departure route (124) after the loading process.

4. Method (200) according to one of the preceding claims, in which the control signal (310) comprises an item of information relating to an area which can be used by the transport machine (102) in order to guide the transport machine (102) within the usable area.

5. Method (200) according to one of the preceding claims, in which the transport requirement results at least from a fuel requirement of the work machine (100), and the control signal (310) is transmitted to a transport machine (102) having a supply of fuel in order to guide said transport machine to the work machine (100), wherein fuel is loaded into the work machine (100) during the loading process until a predetermined filling quantity of fuel in the work machine (100) has been reached or a predetermined minimum quantity of fuel in the transport machine (102) has been reached.

6. Method (200) according to one of the preceding claims, in which the transport requirement results at least from a predetermined loading quantity of transport goods in the work machine (100) being exceeded, and the control signal (310) guides a transport machine (102) with an available loading capacity for the transport goods to the work machine (100), and the loading process is carried out until a predetermined transport quantity of the transport machine (102) for the transport goods is reached or there is no longer a transport requirement.

7. Apparatus (104) for coordinating transport logistics, which is designed to carry out the steps of a method (200) according to one of Claims 1 to 6.

8. Transport logistics system having the following features:
a work machine (100) which has a continuous transport requirement, and an interface for transmitting a request signal (306) and for receiving a loading signal (312);
a transport machine (102) for covering the transport requirement, which machine has an interface for receiving a control signal (310) and a loading signal (312) and a control device (122) for guiding the transport machine (102); and
an apparatus (104) according to Claim 7.

9. Transport logistics system according to Claim 8, in which the apparatus (104) is arranged in the work machine (100).

10. Computer program product having program code for carrying out the method according to one of Claims 1 to 6 when the program is executed on an apparatus.

## Revendications

1. Procédé (200) de coordination d'une logistique de transport, le procédé (200) comprenant les étapes suivantes :
réception (202) d'un signal de demande (306) d'une machine de travail (100) par le biais d'une interface d'un arrangement (104) en vue de la coordination, le signal de demande (306) signalant un besoin en transport de la machine de travail (100) ;
envoi (204) d'un signal de commande (310) par le biais d'une interface de l'arrangement (104) à une machine de transport (102) afin de guider la machine de transport (102) vers la machine de travail (100) lorsque le signal de demande (306) a été reçu, le signal de commande (310) comprenant une information de chemin à propos d'un chemin (106, 112) de la machine de travail (100) afin de guider la machine de transport (102) parallèlement au chemin (106) pendant l'opération de chargement, l'information de chemin étant une trajectoire (112) planifiée de la machine de travail (100) dans un environnement de travail sur laquelle la machine de travail (100) se déplacera probablement ;
réception (206) d'un signal de couplage (308) par le biais d'une interface de l'arrangement (104) lorsque la machine de transport (102) a atteint une position de chargement par rapport à la machine de travail (100) ;
envoi (208) d'un signal de chargement (312) par le biais d'une interface de l'arrangement (104) afin de démarrer une opération de chargement en vue de couvrir le besoin en transport lorsque le signal de couplage (308) a été reçu;
reconnaissance, à l'aide de la trajectoire (112) planifiée, lorsque la machine de travail (100) effectuera un changement de direction ;
envoi d'un signal d'interruption du chargement en vue d'interrompre l'opération de chargement par le biais d'une interface de l'arrangement (104) lorsque le changement de direction de la machine de travail (100) est imminent ; et
détermination d'une trajectoire pour guider la machine de transport (102) pendant que la machine de travail (100) effectue un virage et communication de la trajectoire à la machine de transport (102) par le biais d'une interface de l'arrangement (104).

2. Procédé (200) selon la revendication 1, comprenant une étape d'interrogation d'un état de chargement d'au moins une machine de transport (102) afin de reconnaître une machine de transport (102) prête pour le transport, le signal de commande étant envoyé à la machine de transport (102) prête pour le transport dans l'étape d'envoi (204).

3. Procédé (200) selon l'une des revendications précédentes, comprenant une étape de détermination d'un itinéraire d'approche (118) de la machine de transport (102) vers la machine de travail (100), le signal de commande (310) comprenant une trajectoire de l'itinéraire d'approche (118) vers la machine de travail (100) en vue de guider la machine de transport (102) sur l'itinéraire d'approche (118) vers la machine de travail (100) et/ou comprenant une étape de détermination d'un itinéraire de départ (124) de la machine de transport (102) à l'écart de la machine de travail (100), le signal de commande (310) comprenant une trajectoire de l'itinéraire de départ (124) de la machine de travail (100) en vue de guider ensuite la machine de transport (102) après l'opération de chargement sur l'itinéraire de départ (124) à l'écart de la machine de travail (100).

4. Procédé (200) selon l'une des revendications précédentes, selon lequel le signal de commande (310) comprend une information à propos d'une zone carrossable pour la machine de transport (102) afin de guider la machine de transport (102) à l'intérieur de la zone carrossable.

5. Procédé (200) selon l'une des revendications précédentes, selon lequel le besoin en transport résulte au moins d'un besoin en carburant de la machine de travail (100), et le signal de commande (310) est envoyé à une machine de transport (102) ayant une réserve de carburant afin de guider celle-ci vers la machine de travail (100), du carburant étant chargé dans la machine de travail (100) pendant l'opération de chargement jusqu'à ce qu'une quantité de remplissage prédéterminée de carburant soit atteinte dans la machine de travail (100) ou qu'une quantité minimale prédéterminée de carburant soit atteinte dans la machine de transport (102).

6. Procédé (200) selon l'une des revendications précédentes, selon lequel le besoin en transport résulte au moins d'un dépassement d'une quantité de chargement prédéterminée d'une marchandise transportée dans la machine de travail (100), et le signal de commande (310) guide une machine de transport (102) ayant une capacité de chargement existante pour la marchandise transportée vers la machine de travail (100), et l'opération de chargement étant effectuée jusqu'à ce qu'une quantité de transport prédéterminée de la machine de transport (102), de la marchandise transportée soit atteinte ou qu'il n'existe plus de besoin en transport.

7. Arrangement (104) de coordination d'une logistique de transport, lequel est conçu pour exécuter les étapes d'un procédé (200) selon l'une des revendications 1 à 6.

8. Système logistique de transport, possédant les caractéristiques suivantes :
une machine de travail (100) qui présente un besoin en transport continu et une interface destinée à envoyer un signal de demande (306) et à recevoir un signal de chargement (312) ;
une machine de transport (102) destinée à couvrir le besoin en transport, laquelle possède une interface destinée à recevoir un signal de commande (310) et un signal de chargement (312) ainsi qu'un contrôleur (122) destiné à guider la machine de transport (102) ; et
un arrangement (104) selon la revendication 7.

9. Système logistique de transport selon la revendication 8, avec lequel l'arrangement (104) est disposé dans la machine de travail (100).

10. Produit de programme informatique comprenant un code de programme destiné à mettre en oeuvre le procédé selon l'une des revendications 1 à 6 lorsque le programme est exécuté sur un arrangement.
